# EUROPÄISCHE PATENTSCHRIFT

(11) **EP 1 407 561 B1**
(45) Veröffentlichungstag und Bekanntmachung des Hinweises auf die Patenterteilung: **02.03.2005**
(21) Anmeldenummer: 02740734.5
(22) Anmeldetag: 19.06.2002
(51) Int. Cl.: H04B 3/60

(54) **VORRICHTUNG ZUR INDUKTIVEN ÜBERTRAGUNG ELEKTRISCHER ENERGIE**
DEVICE FOR THE INDUCTIVE TRANSMISSION OF ELECTRICAL POWER
DISPOSITIF DE TRANSFERT INDUCTIF D'ENERGIE ELECTRIQUE

(30) Priorität: 04.07.2001 DE 10131905
(43) Veröffentlichungstag der Anmeldung: 14.04.2004
(73) Patentinhaber: Wampfler Aktiengesellschaft, 79576 Weil am Rhein-Maerkt (DE)
(72) Erfinder: BÖHLER, Frank, 79639 Grenzach-Wyhlen (DE); WINTERHALTER, Roland, 79206 Breisach (DE); WECHLIN, Mathias, 79400 Kandern (DE); MECKE, Rudolf, 39126 Magdeburg (DE)
(74) Vertreter: Gehrsitz, Stefan, Dr.
(86) Internationale Anmeldenummer: PCT/EP2002/006765
(87) Internationale Veröffentlichungsnummer: WO 2003/005380

(56) Entgegenhaltungen:
- DE-A- 3 921 786
- DE-A- 4 244 202
- DE-A- 19 538 528
- DE-C- 4 218 707
- DE-U- 8 233 003
- US-A- 5 936 946

## Beschreibung

Die Erfindung betrifft eine Vorrichtung zur induktiven Übertragung elektrischer Energie nach dem Oberbegriff des Anspruchs 1.

Eine derartige Vorrichtung, wie sie beispielsweise aus der WO 92/17929 bekannt ist, dient zur Übertragung elektrischer Energie zu mindestens einem beweglichen Verbraucher ohne mechanischen oder elektrischen Kontakt. Sie umfaßt einen Primär- und einen Sekundärteil, die ähnlich dem Prinzip des Transformators elektromagnetisch gekoppelt sind. Der Primärteil besteht aus einer Einspeisungselektronik und einer entlang einer Strecke verlegten Leiterschleife. Ein oder mehrere Abnehmer und die zugehörige Abnehmerelektronik bilden die Sekundärseite. Im Gegensatz zum Transformator, bei dem Primär- und Sekundärteil möglichst eng gekoppelt sind, handelt es sich um ein lose gekoppeltes System. Möglich wird dies durch eine relativ hohe Betriebsfrequenz im Kilohertzbereich wie auch bei der berührungslosen Signalübertragung für mess-und Steuergeräte nach DE 3921786 A1. So können auch große Luftspalte bis zu einigen Zentimetern überbrückt werden. Dabei wird die Betriebsfrequenz sekundärseitig als Resonanzfrequenz eines Parallelschwingkreises festgelegt, der durch die Parallelschaltung eines Kondensators zu der Abnehmerspule gebildet wird.

Zu den Vorteilen dieser Art der Energiezuführung zählen insbesondere die Verschleiß- und Wartungsfreiheit, sowie die Berührungssicherheit und eine hohe Verfügbarkeit. Typische Anwendungen sind automatische Maierialtransportsysteme in der Fertigungstechnik, aber auch Personentransportsysteme, wie Aufzüge und elektrisch angetriebene Busse. Bei vielen dieser Anwendungen besteht das Bedürfnis nach einer Kommunikationsverbindung zwischen einer zentralen Steuereinrichtung und dem beweglichen Verbraucher, insbesondere zum Zweck der Fernsteuerung des Verbrauchers. Darüber hinaus kann es bei einem System mit einer Vielzahl beweglicher Verbraucher auch wünschenswert sein, daß die Verbraucher untereinander kommunizieren können, beispielsweise um ihre Bewegungen selbständig zu koordinieren und Kollisionen zu vermeiden. Nach dem Stand der Technik wird eine solche Kommunikation üblicherweise in Form von Funkverbindungen betrieben.

Der Erfindung liegt die Aufgabe zugrunde, bei einer Vorrichtung zur induktiven Übertragung elektrischer Energie einen neuen Weg zur Übertragung von Information zu dem beweglichen Verbraucher aufzuzeigen und ein hierfür geeignetes Kabel bereitzustellen. Kabel mit integrierten Versorgungs- und Signalleitern werden z.B. in DE 42 18 707 C1 und DE 8233003 U1 beschrieben.

Diese Aufgabe wird erfindungsgemäß durch eine Vorrichtung mit den Merkmalen nach Anspruch 1 und durch ein Kabel mit den Merkmalen nach Anspruch 14 gelöst. Vorteilhafte Ausgestaltungen der Erfindung sind den Unteransprüchen 2 bis 13 bzw. 15 bis 18 zu entnehmen.

Die Erfindung macht sich die Tatsache zunutze, daß das Prinzip der induktiven Kopplung ebenso gut zur Datenübertragung wie zur Energieübertragung eingesetzt werden kann, und daß bei der Verlegung der Primärleiterschleife die Verlegung einer parallel dazu verlaufenden Datenleitung nur einen geringen zusätzlichen Aufwand bedeutet. Dieses Konzept wirft allerdings das Problem auf, daß die Datenleitung ausreichend eng mit der ihr zugeordneten Empfangs- und/oder Sendeeinrichtung in dem beweglichen Verbraucher induktiv gekoppelt sein muß, gleichzeitig aber soweit wie möglich von der Energieleitung entkoppelt sein sollte. Die Erfindung löst dieses Problem durch eine spezielle geometrische Anordnung der Datenleitung in Bezug auf die Energieleitung.

Besonders vorteilhaft ist die Verwendung eines speziell für die erfindungsgemäße Kombination einer Datenleitung mit einer Energieleitung optimierten Kabels, wodurch sich der Aufwand zur gemeinsamen Verlegung der beiden Leitungen sowie die Gefahr einer fehlerhaften Verlegung stark verringert. Ein weiterer Vorteil eines solchen Kabels, in dem beide Leitungen integriert sind, ist eine im Vergleich zu zwei separaten Kabeln höhere Biegesteifigkeit, wodurch bei einer hängenden Anordnung zur Einhaltung eines vorgegebenen maximalen Durchhangs weniger Befestigungspunkte benötigt werden.

Nachfolgend werden Ausführungsbeispiele der Erfindung anhand der Zeichnungen beschrieben. In diesen zeigt
- Fig. 1: eine schematische Längsansicht einer erfindungsgemäßen Vorrichtung,
- Fig. 2: eine schematische Querschnittsansicht einer ersten Ausführungsform der Vorrichtung nach Fig. 1,
- Fig. 3: eine schematische Querschnittsansicht einer anderen Ausführungsform der Vorrichtung nach Fig. 1,
- Fig. 4 A-C: schematische Querschnittsansichten verschiedener Ausführungsformen eines erfindungsgemäßen Spezialkabels.

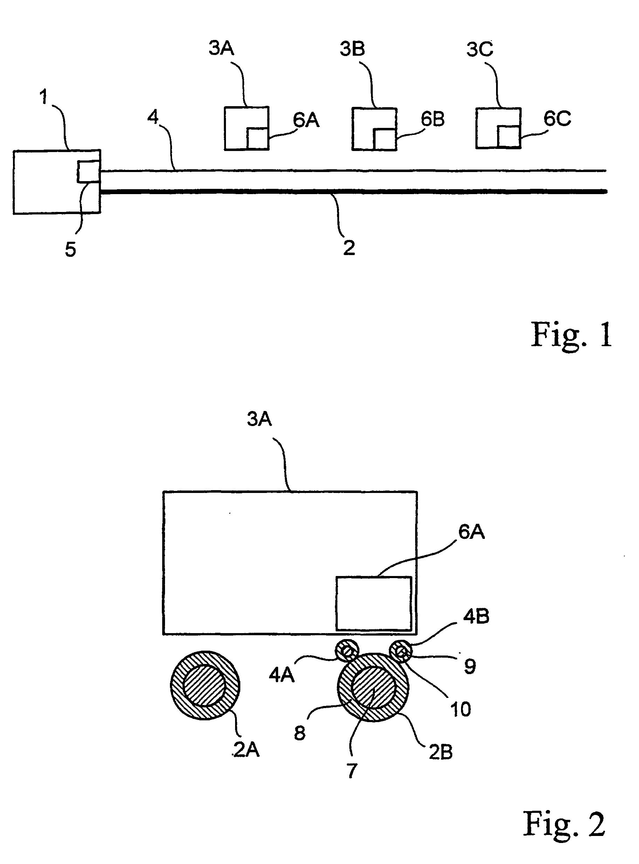

Wie Fig. 1 schematisch zeigt, besteht ein System zur induktiven Übertragung elektrischer Energie aus einer Einspeisungselektronik 1, einer Energieleitung 2, sowie aus einem oder mehreren beweglichen Abnehmern 3A bis 3C, wobei die in Fig. 1 dargestellte Anzahl von 3 Abnehmern 3A bis 3C rein beispielhaften Charakter hat. Die Einspeisungselektronik 1 speist einen Wechselstrom in die schleifenförmig geführte Energieleitung 2 ein, mit der die Abnehmer 3A bis 3C jeweils induktiv gekoppelt sind. Ein Abnehmer 3A bis 3C ist jeweils Bestandteil eines entlang der Energieleitung 2 beweglichen Verbrauchers, den er aufgrund besagter induktiver Kopplung mit einer Wechselspannung versorgt. Diese kann in dem Verbraucher je nach Bedarf umgeformt werden. Beispielsweise kann dort mittels eines Gleichrichters und eines Schaltreglers bekannter Art eine Gleichspannung gewünschter Größe erzeugt werden.

Erfindungsgemäß verläuft parallel zu der Energieleitung 2 eine Datenleitung 4, die seitens der Einspeisungselektronik 1 direkt an eine kombinierte Sende- und Empfangseinrichtung 5, nachfolgend als Transceiver bezeichnet, angeschlossen ist. Seitens der Abnehmer 3A bis 3C ist jeweils ebenfalls ein Transceiver 6A bis 6C vorgesehen, der mit der Datenleitung 4 induktiv gekoppelt ist. Zwischen dem Transceiver 5 und den Transceivern 6A bis 6C werden in beiden Richtungen Informationen seriell übertragen, beispielsweise in Form von Steuerbefehlen an die beweglichen Verbraucher sowie von Statusmeldungen von den einzelnen Verbrauchern. Es versteht sich von selbst, daß im Grundsatz auch ein reiner Sender auf einer Seite mit einem oder mehreren reinen Empfängern auf der anderen Seite kombiniert werden kann, sofern eine bidirektionale Kommunikation nicht von Interesse sein sollte. Andererseits können bidirektionale Transceiver 6A bis 6C nicht nur mit dem ortsfesten Transceiver 5, sondern auch untereinander kommunizieren. Letztlich steht mit der Datenleitung 4 das Übertragungsmedium für einen seriellen Datenbus zur Verfügung, über den von den angeschlossenen Teilnehmern, dem ortsfesten Transceiver 5 sowie den beweglichen Transceivern 6A bis 6C, beliebig komplexe Daten auf der Basis eines geeigneten Protokolls übertragen werden können.

Während die induktive Übertragung von Informationssignalen als solche in der Nachrichtentechnik beispielsweise aus der Anwendung von Übertragern zur Widerstandstransformation oder zur Potentialtrennung seit langem bekannt ist, besteht die Besonderheit ihrer Anwendung bei der vorliegenden Erfindung darin, daß Primär- und Sekundärseite relativ zueinander nicht ortsfest, sondern entlang einer weiten Strecke beweglich sind, und daß die Informationsübertragung mit einer gleichzeitigen, ebenfalls induktiven Energieübertragung über die nahezu gleiche Distanz einhergeht.

Bei einem parallelen Verlauf der beiden Leitungen 2 und 4 ist aufgrund der Tatsache, daß das zur Energieübertragung bestimmte Feld eine wesentlich größere magnetische Flußdichte haben muß als das zur Informationsübertragung bestimmte, in erster Linie mit einem Übersprechen von der Energieleitung 2 auf die Datenleitung 4, d.h. mit einer Störung der übertragenen Informationssignale zu rechnen. Um diese Störung weitgehend zu unterdrücken, sieht die vorliegende Erfindung für die beiden Leitungen 2 und 4 beispielsweise die in Fig. 2 im Querschnitt dargestellte geometrische Anordnung der einzelnen Adern 2A und 2B bzw. 4A und 4B vor.

Jede der beiden Leitungen 2 und 4 ist schleifenförmig geführt. So fließt zu einem beliebigen Zeitpunkt der primärseitig zur Energieübertragung in die Leitung 2 eingespeiste Strom beispielsweise in der Ader 2A von der Einspeisungselektronik 1 weg und in der anderen Ader 2B zu dieser zurück oder umgekehrt. In analoger Weise fließt der entweder von dem Transceiver 5 in die Leitung 4 eingespeiste oder von einem der Transceiver 6A bis 6C in der Leitung 4 induzierte Strom zu einem beliebigen Zeitpunkt beispielsweise in der Ader 4A in Richtung von dem Transceiver 5 weg und in der anderen Ader 4B zu dem Transceiver 5 hin oder umgekehrt. Topologisch heißt dies, daß die Adern 2A und 2B einerseits und die Adern 4A und 4B andererseits jeweils am Ende der Bewegungsstrecke der Abnehmer 3A bis 3C schleifenförmig ineinander übergehen oder dort jeweils durch ein Abschlußglied leitend miteinander verbunden sind. Die beiden Adern 2A und 2B der Energieleitung 2 bestehen, wie in Fig. 2 anhand der Ader 2B gezeigt ist, jeweils aus einem metallischen Leiter 7, der von einer Isolierung 8 umgeben ist. In analoger Weise bestehen die beiden Adern 4A und 4B der Datenleitung 4, wie in Fig. 2 anhand der Ader 4B gezeigt ist, jeweils aus einem metallischen Leiter 9, der von einer Isolierung 10 umgeben ist.

Um die Störung der Informationsübertragung durch die Energieübertragung möglichst gering zu halten, muß die Gegeninduktivität zwischen den beiden Leitungen 2 und 4 möglichst gering gehalten werden. Dies bedeutet, daß der durch den Strom in der Energieleitung 2 erzeugte magnetische Fluß möglichst gering mit der Datenleitung 4 verkettet sein sollte, d.h. die Verbindungsebene der beiden Adern 4A und 4B möglichst wenig durchsetzen sollte. Für denjenigen Anteil des Gesamtflusses, der von dem Strom in der Ader 2B herrührt, wird dies bei der Anordnung nach Fig. 2 in idealer Weise erreicht, da das Feld eines geradlinigen Stromes in der Querschnittsebene bekanntlich tangential verläuft, die Feldlinien des Stromes in der Ader 2B also bei radialsymmetrischer Stromverteilung, die hier ohne weiteres vorausgesetzt werden darf, konzentrische Kreise um die Mittelachse der Ader 2B sind, woraus sich ein resultierender magnetischer Flußanteil von Null durch die Verbindungsebene der Adern 4A und 4B ergibt. Erreicht wird dies durch die symmetrische Anordnung der beiden Adern 4A und 4B in Bezug auf die Ader 2B.

Das Feld der anderen Ader 2A, dessen Feldlinien konzentrische Kreise um die Mittelachse der Ader 2A sind, ergibt zwar einen nicht verschwindenden Flußanteil durch die Verbindungsebene der Adern 4A und 4B, doch fällt dieser weniger stark ins Gewicht, da die Ader 2A weiter entfernt ist als die Ader 2B. Es ist klar, daß dieser Flußanteil um so kleiner ist, je weiter die Adern 4A und 4B von der Ader 2A entfernt sind, und je näher beieinander die Adern 4A und 4B liegen. Einer Verringerung besagten Flußanteils durch weitere Erhöhung der Entfernung von der Ader 2A steht aber entgegen, daß man die Leitung 4 dann nicht mehr zusammen mit der Leitung 2 in einem gemeinsamen Kanal verlegen und auch den Transceiver 6A nicht mehr, wie in Fig. 2 angedeutet, zusammen mit dem Abnehmer 3A in einer Baueinheit integrieren könnte. Letzteres gilt auch für eine Drehung der beiden Adern 4A und 4B um 90° im Uhrzeigersinn um die Mittelachse der Ader 2B, die im Hinblick auf die Minimierung der Verkettung mit dem von der Ader 2A erzeugten Fluß optimal wäre. Eine separat verlegte Datenleitung 4 und/oder ein vollkommen separat von dem Abnehmer 3A angeordneter Transceiver 6A wären mit wesentlich höheren Systemkosten verbunden. Andererseits steht einer Verringerung besagten Flußanteils durch weitere Verringerung der gegenseitigen Entfernung der Adern 4A und 4B entgegen, daß dadurch zwangsläufig auch die magnetische Kopplung zwischen der Leitung 4 und dem Transceiver 6A abnehmen würde.

Die symmetrische Anordnung der Datenleitung 4 zu einer der Adern 2B in unmittelbarer Nachbarschaft derselben stellt somit hinsichtlich der Unterdrückung des Übersprechens von der Energieleitung 2 auf die Datenleitung 4 einen Kompromiß dar, wobei es zur Maximierung der magnetischen Kopplung zwischen der Datenleitung 4 und dem Transceiver 6A zweckmäßig ist, von allen Anordnungen, die bezüglich der Symmetrie der Datenleitung 4 zur benachbarten Ader 2B der Energieleitung 2 gleichwertig sind, diejenige auszuwählen, bei der die Datenleitung 4 dem Transceiver 6A möglichst nahe liegt Es versteht sich von selbst, daß bei einer Integration des Transceivers 6A in den Abnehmer 3A, wie sie Fig. 2 zeigt, sekundärseitig der Transceiver 6A möglichst nahe bei der Ader 2B und damit auch bei der Datenleitung 4 angeordnet werden sollte.

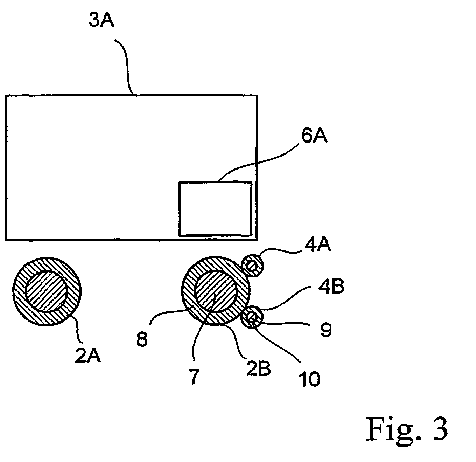

Alternativ zu der in Fig. 2 dargestellten Anordnung können die beiden Leiter der Datenleitung 4 auch so angeordnet werden, daß sie die gleiche Art von Symmetrie wie zu der benachbarten Ader 2B auch in Bezug auf die entferntere Ader 2A der Energieleitung 2 aufweisen. Hierzu zeigt Fig. 3 als Beispiel die zuvor bereits erwähnte Anordnung, bei der die beiden Adern 4A und 4B der Datenleitung 4 gegenüber der Anordnung nach Fig. 2 bezüglich der Mittelachse der benachbarten Ader 2B der Energieleitung 2 um 90° im Uhrzeigersinn gedreht sind. In diesem Fall besteht auch keine Verkettung der Datenleitung 4 mit dem von der entfernteren Ader 2A erzeugten magnetischen Fluß mehr, so daß theoretisch überhaupt kein induktives Übersprechen mehr möglich ist.

Es versteht sich von selbst, daß die in Fig. 3 gezeigte Position des Transceivers 6A, die mit derjenigen aus Fig. 2 übereinstimmt, nicht optimal ist. Nimmt man an, daß bei dem in Fig. 2 dargestellten Transceiver 6A die Richtung maximaler Empfindlichkeit senkrecht zu der durch die Mittelachsen der beiden Adern 4A und 4B der Datenleitung 4 definierten Ebene verläuft, was in Fig. 2 eine optimale Ausrichtung des Transceivers 6A bedeutet, dann wäre bei der um 90° im Uhrzeigersinn gedrehten Anordnung der Datenleitung 4 in Fig. 3 eine gleichermaßen gedrehte Anordnung des Transceivers 6A rechts neben den Adern 4A und 4B optimal. Im Regelfall steht dieser Ort aber im Hinblick auf die Realisierbarkeit von Verzweigungen der Energieleitung 2 gar nicht zur Verfügung, so daß der Transceiver 6A auch bei der Ausführungsform nach Fig. 3 oberhalb der Energieleitung 2 angeordnet werden muß. Dabei ergibt sich die laterale Position des Transceivers 6A als Kompromiß zwischen der induktiven Kopplung einerseits und dem für den Ein- oder Anbau in bzw. an den Abnehmer 3A zur Verfügung stehenden Raum andererseits.

Darüber hinaus kann die Sende- und Empfangsspule des Transceivers 6A auch innerhalb desselben schräg zu den Außenwänden seines Gehäuses eingebaut und auf diese Weise die Richtung maximaler Empfindlichkeit ohne Drehung des Gehäuses variiert werden. Hierin besteht ein zusätzlicher Freiheitsgrad zur Anpassung eines oberhalb der Energieleitung 2 plazierten Transceivers 6A an eine seitliche Anordnung des Datenkabels gemäß Fig. 3.

Die Erfindung beschränkt sich keineswegs auf die in den Figuren dargestellte Querschnittsform der Leitungen 2 und 4. Beispielsweise könnten die Adern 2A und 2B der Energieleitung 2 auch einen rechteckigen Querschnitt aufweisen, wobei es auf die Querschnittsform des Leiters 7 ankäme. In diesem Fall hätte der Querschnitt des Leiters 7 zwei Symmetrieebenen und die beiden Adern 4A und 4B der Datenleitung 4 müßten symmetrisch in Bezug auf eine dieser Symmetrieebenen angeordnet werden, um den von dem Strom in der Ader 2B herrührenden Flußanteil zu eliminieren.

Des weiteren kann auch der Abnehmer 3A eine andere Form haben. Beispielsweise kann er T-förmig oder E-färmig gestaltet sein, wobei im einen Fall der vertikale T-Balken zwischen die beiden Adern 2A und 2B hineinragen würde, während im anderen Fall der mittlere E-Schenkel zwischen die beiden Adern 2A und 2B ragen würde und die beiden äußeren Schenkel diese seitlich umgreifen würden. Analog hierzu kann auch der Transceiver 6A eine andere als die in Fig. 2 dargestellte Querschnittsform haben.

Ferner kann die erfindungsgemäße Anordnung einer Datenleitung 4 auch auf beide Adern 2A und 2B der Energieleitung gleichzeitig angewendet werden, um eine zweite Datenleitung 4 zur Realisierung einer Kommunikation im Vollduplex-Betrieb bereitzustellen. Hierzu werden dann sowohl primärseitig, als auch sekundärseitig entsprechende Transceiver 5 bzw. 6A bis 6C für jede der beiden Datenleitungen 4 benötigt. Eine Kommunikation im Vollduplex-Betrieb wäre aber auch mit nur einer Datenleitung 4, wie sie in den Figuren 2 und 3 wiedergegeben ist, durch Trennung der beiden Übertragungsrichtungen im Frequenzbereich möglich.

Wie die Figuren 2 und 3 erkennen lassen, kann die Datenleitung 4 separat von der Energieleitung 2 ausgebildet sein. In diesem Fall ist es zur Einhaltung einer definierten Lage der Datenleitung 4 gegenüber dem Transceiver 6A zweckmäßig, die Datenleitung 4 an der Ader 2B der Energieleitung 2 zu fixieren. Dies könnte beispielsweise durch Kleben oder mittels handelsüblicher Kabelbinder geschehen. Eine unter dem Gesichtspunkt der Montagefreundlichkeit wesentlich zweckmäßigere Art der Befestigung ist die Anordnung von Halteklammern in regelmäßigen Abständen entlang der Leitungen 2 und 4, wobei die Klammern so geformt sind, daß die Leitungen 2 und 4 durch einen kurzen Handgriff mit einer Klammer verrastet werden können. Die beiden Leitungen 2 und 4 können aber auch in einem gemeinsamen Spezialkabel zusammengefaßt sein, wodurch sich die Verlegung am weitesten vereinfacht.

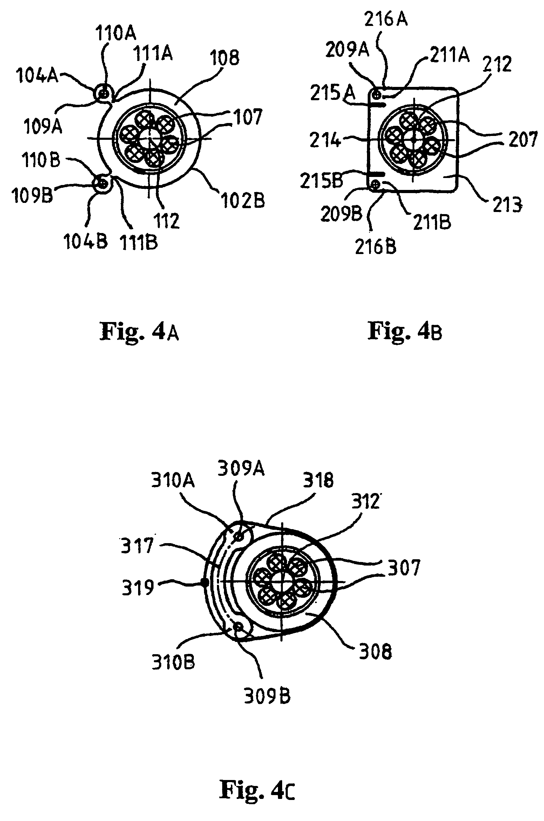

Die Figuren 4A bis 4C zeigen drei mögliche Varianten eines solchen Spezialkabels im Querschnitt. Bei der Variante nach Fig. 4A sind die kreisringförmigen Isolierungen 110A und 110B der beiden Adern 104A und 104B, welche zusammen die Datenleitung 4 bilden, jeweils über Stege 111A bzw. 111B einstückig mit der kreisringförmigen Isolierung 108 einer Ader 102B der Energieleitung 2 verbunden. Die gesamte aus den Teilen 108, 110A und 110B, sowie 111A und 111B bestehende Isolierung ist in einem einzigen Arbeitsgang um die Leiter 107, 109A und 109B extrudiert. Durch die unsymmetrische äußere Form ist die Lage der Leiter 109A und 109B in Bezug auf den Leiter 107 ohne weiteres von außen erkennbar, so daß eine Fehlorientierung bei der Verlegung weitestgehend ausgeschlossen ist.

Bei allen drei in den Figuren 4A bis 4C gezeigten Varianten bestehen die jeweiligen Leiter 107, 207 und 307 der Energieleitung 2 aus Litze, d.h. aus einer Vielzahl einzelner, gegeneinander isolierter Drähte, die spiralförmig um einen zentralen Isolator 112 bzw. 212 bzw.312 gewickelt sind, wobei die spiralförmige Wicklung in der Querschnittsansicht der Figuren 4A bis 4C nicht erkennbar ist. Der Querschnitt der Leiter 107, 207 und 307 ist somit zwar nicht kreisförmig, wie in den Figuren 2 und 3 schematisch dargestellt, die Stromverteilung kann aber dennoch als annähernd radialsymmetrisch betrachtet werden. Somit treffen die anhand der Figuren 2 und 3 getroffenen Aussagen über das Magnetfeld des Stromes in dem Leiter 7 gleichermaßen auch auf die Leiter 107, 207 und 307 der in den Figuren 4A bis 4C dargestellten Kabelvarianten zu. Im übrigen ist die Zweckmäßigkeit der Verwendung von Litze für die Energieleitung 2 davon abhängig, welches Ausmaß bei den jeweiligen Betriebsparametern (Strom und Frequenz) die radiale Stromverdrängung hat. Es sind auch Konfigurationen möglich, bei denen auf Litze verzichtet und ein Leiter mit kreisförmigem Querschnitt wie in den Figuren 2 und 3 eingesetzt werden kann.

Bei der Variante nach Fig. 4A sind die Stege 111A und 111B vergleichsweise dünn, so daß die beiden Adern 104A und 104B mit geringem Kraftaufwand von der Ader 102B getrennt werden können. Dies ist bereits deshalb wünschenswert, weil die Energieleitung 2 an ihrem Anfang an eine Binspcisungselektronik 1, die Datenleitung hingegen an einen Transceiver 5 angeschlossen werden muß, wie aus Fig. 1 ersichtlich ist. Darüber hinaus müssen in die Energieleitung 2 entlang ihres Verlaufes hier nicht dargestellte Abstimmkondensatoren geschaltet werden, um die Energieleitung 2 bei der von der Einspeisungselektronik 1 vorgegebenen Betriebsfrequenz in Resonanz zu versetzen, während die Datenleitung 4 keine solchen Abstimmkondensatoren benötigt. Es ist daher allgemein von Vorteil, wenn die Datenleitung 4 ohne großen Aufwand von der Energieleitung 2 getrennt werden kann, um an jeder der beiden Leitungen unabhängig von der jeweils anderen spezielle Systemkomponenten anzuschließen.

Die Kabelvariante nach Fig. 4B unterscheidet sich von derjenigen nach Fig. 4A durch einen rechteckigen Querschnitt der einstückigen gemeinsamen Isolierung 213 des Leiters 207 der Energieleitung 2 und der beiden Leiter 209A und 209B der Datenleitung 4. Die beiden Leiter 209A und 209B sind in zwei eine Seite 214 der Isolierung 213 begrenzenden Ecken derselben angeordnet. Von besagter Seite 214 aus und senkrecht zu dieser erstrecken sich benachbart zu den Leitern 209A und 209B zwei Schlitze 215A und 215B längs des Kabels, wodurch die Seite 214 von außen als solche identifizierbar ist. An einer der Tiefe der Schlitze 215A und 215B entsprechenden Position erstrecken sich an den beiden der Seite 214 benachbarten Seiten der Isolierung 213 jeweils Kerben 216A und 216B längs des Kabels. Jede dieser Kerben 216A und 216B definiert zusammen mit dem jeweils benachbarten Schlitz 215A bzw. 215B eine Sollbruchstelle 21 1A bzw. 211B, die dem Steg 111A bzw. 111B der Variante nach Fig. 4A entspricht und ein problemloses Abtrennen der Datenleitung 4 von der Energieleitung 2 ermöglicht

Die dritte Kabelvariante nach Fig. 4C setzt im Gegensatz zu den beiden ersten keine einstückige Extrusion der gesamten Isolierung mittels eines speziellen Werkzeugs voraus. Vielmehr sind bei dieser Variante die Energieleitung 2 und die Datenleitung 4 zunächst separat ausgebildet und werden nachträglich miteinander verbunden. Dabei entspricht die Querschnittsform der Energieleitung 2 derjenigen aus Fig. 4A mit einem Leiter 307 und einer zugehörigen kreisringförmigen Isolierung 308. Die Datenleitung 4 besteht aus zwei Leitern 309A und 309B mit jeweils einer kreisringtörmigen Isolierung 310A bzw. 310B. Letztere sind durch einen Steg 317 einstückig miteinander verbunden. Durch den Steg 317 ist der gegenseitige Abstand der Leiter 309A und 309B weitgehend festgelegt und insbesondere in Längsrichtung der Datenleitung 4 konstant. Die Datenleitung 4 ist in ihrem Aufbau mit einer 300Ω-Antennenleitung früher üblicher Art vergleichbar. Grundsätzlich wäre es auch denkbar, für die Datenleitung 4 ein Flachkabel mit mehr als zwei Adern zu verwenden, von denen dann nur zwei zur Datenübertragung benutzt würden.

Zur mechanischen Verbindung der beiden Leitungen wird die Datenleitung 4 an die Energieleitung angelegt, wobei der Steg 317 vorzugsweise flexibel sein sollte, damit sich die Datenleitung 4 in ihrer Form an die Energieleitung 2 anpassen kann, wie es in Fig. 4C dargestellt ist. Dann werden beide mit einer gemeinsamen Ummantelung 318, die vorzugsweise aus einem textilen oder textilverstärkten Material besteht, umwickelt Da bei dieser Variante die Lage der Datenleitung in Bezug auf die Energieleitung nicht ohne weiteres an der äußeren Form des Kabels erkennbar ist, wird diese Position vorzugsweise durch eine Farbmarkierung, beispielsweise durch einen die Mitte der Datenleitung 4 anzeigenden Strich 319, auf der Außenseite der Ummantelung 318 gekennzeichnet. Vorteilhaft ist die Variante nach Fig. 4C insbesondere dann, wenn die insgesamt benötigte Länge des Kabels den Aufwand zur Extrusion einer einstückigen Isolierung unter wirtschaftlichen Gesichtspunkten nicht rechtfertigt.

Um eine Unterscheidung anhand der Frequenz zu ermöglichen, ist es zweckmäßig, wenn das Infoanationssignal in einem höheren Frequenzbereich als das Energiesignal, also beispielsweise im Bereich einiger Megahertz liegt. Zur Aufprägung der digitalen Information kann ein digitales Modulationsverfahren bekannter Art, beispielsweise Frequenzumtastung (FSK) gewählt werden. Als grober Richtwert für den in Frage kommenden Bereich der Übertragungsrate kann 10 bis 150 kBit/s veranschlagt werden, wobei die Trägerfrequenz bekanntermaßen in geeigneter Weise angepaßt werden muß. Je nach Anwendung ist die Länge der Übertragungsstrecke, welche der Länge des Bewegungsbereiches des zu versorgenden Verbrauchers entspricht, in weiten Grenzen, d.h. von ca. einem Meter bis zu mehreren hundert Metern, variabel.

## Patentansprüche

1. Vorrichtung zur induktiven Übertragung elektrischer Energie, mit einer aus zwei parallel zueinander geführten Adern bestehenden primärseitigen Energieleitung, der durch mindestens einen sekundärseitigen beweglichen Abnehmer mittels induktiver Kopplung entlang ihres Verlaufes Energie entnommen werden kann, **dadurch gekennzeichnet, daß** zur zusätzlichen induktiven Übertragung von Daten zu oder von dem Abnehmer (3A bis 3C) primärseitig eine aus zwei parallel zueinander geführten Adern (4A, 4B) bestehende Datenleitung (4) vorgesehen ist, daß beide Adern (4A, 4B) der Datenleitung benachbart zu einer der beiden Adern (2B) der Energieleitung (2) und weiter entfernt von der anderen der beiden Adern (2A) der Energieleitung (2) angeordnet sind, und daß sie symmetrisch zu einer Ebene angeordnet sind, bezüglich derer der Querschnitt des Leiters (7) der benachbarten Ader (2B) der Energieleitung (2) seinerseits symmetrisch ist.

2. Vorrichtung nach Anspruch 1, **dadurch gekennzeichnet, daß** die Datenleitung (4) in Bezug auf die weiter entfernte Ader (2A) der Energieleitung (2) die gleiche Art von Symmetrie aufweist wie in Bezug auf die benachbarte Ader (2B).

3. Vorrichtung nach Anspruch 2, **dadurch gekennzeichnet, daß** die Datenleitung auf derjenigen Seite der benachbarten Ader (2B) der Energieleitung (2) angeordnet ist, welche der anderen Ader (2A) abgewandt ist.

4. Vorrichtung nach Anspruch 1, **dadurch gekennzeichnet, daß** die Datenleitung (4) in dem Zwischenraum zwischen der ihr benachbarten Ader (2B) der Energieleitung (2) und dem Raum, in dem sich der sekundärseitige Abnehmer (3A bis 3C) bewegt, angeordnet ist.

5. Vorrichtung nach einem der Ansprüche 1 bis 4, **dadurch gekennzeichnet, daß** die Datenleitung (4) an der Energieleitung (2) befestigt ist.

6. Vorrichtung nach Anspruch 5, **dadurch gekennzeichnet, daß** die Befestigung der Datenleitung (4) an der Energieleitung (2) durch eine Vielzahl von Verbindungsgliedern bewirkt wird, die entlang der beiden Leitungen (2 und 4) angeordnet und mit diesen verrastet sind.

7. Vorrichtung nach einem der Ansprüche 1 bis 5, **dadurch gekennzeichnet, daß** die Datenleitung (4) zusammen mit der Energieleitung (2) in einem gemeinsamen Kabel integriert ist.

8. Vorrichtung nach einem der Ansprüche 1 bis 7, **dadurch gekennzeichnet, daß** in oder an dem sekundärseitigen Abnehmer (3A bis 3C) eine Induktivität vorgesehen ist, die mit der Datenleitung (4) magnetisch gekoppelt ist.

9. Vorrichtung nach Anspruch 8, **dadurch gekennzeichnet, daß** die mit der Datenleitung (4) magnetisch gekoppelte abnehmerseitige Induktivität in oder an dem Abnehmer (3A bis 3C) so angeordnet ist, daß sie in der Betriebsposition des Abnehmers (3A bis 3C) die gleiche Art von Symmetrie wie die Datenleitung (4) zu derjenigen Ader (2B) der Energieleitung (2), zu welcher die Datenleitung (4) benachbart ist, einhält

10. Vorrichtung nach Anspruch 8 oder 9, **dadurch gekennzeichnet, daß** einerseits an mindestens einer Stelle entlang der primärseitigen Datenleitung (4) oder an einem Ende derselben, sowie andererseits in oder an dem sekundärseitigen Abnehmer (3A bis 3C) mindestens eine Sendeeinrichtung (5) und mindestens eine Empfangseinrichtung (6A bis 6C) vorgesehen sind, zwischen denen über die Datenleitung (4) und die mit dieser magnetisch gekoppelte Induktivität Informationssignale übertragbar sind.

11. Vorrichtung nach Anspruch 10, **dadurch gekennzeichnet, daß** sowohl primärseitig, als auch sekundärseitig jeweils kombinierte Sende- und Empfangseinrichtungen (5; 6A bis 6C) vorgesehen ist, wodurch eine bidirektionale Kommunikation über die Datenleitung (4) ermöglicht wird.

12. Vorrichtung nach einem der Ansprüche 1 bis 11, **dadurch gekennzeichnet, daß** benachbart zu jeder der beiden Adern (2A, 2B) der Energieleitung (2) je eine Datenleitung (4) angeordnet ist

13. Vorrichtung nach Anspruch 12, **dadurch gekennzeichnet, daß** primärseitig und sekundärseitig jeder Datenleitung (4) entsprechende Sende- und Empfangseinrichtungen (5; 6A bis 6C) zugeordnet sind, die zusammen eine Kommunikation im Vollduplex-Betrieb realisieren.

14. Kabel für die Primärleiterschleife einer Vorrichtung zur induktiven Übertragung elektrischer Energie zu mindestens einem beweglichen Verbraucher, mit einem Leiter von annähernd symmetrischem Querschnitt, der von einer Isolierung umgeben ist, **dadurch gekennzeichnet, daß** zur gleichzeitigen induktiven Übertragung von Daten zu und/oder von dem Verbraucher zwei weitere Leiter (109A, 109B; 209A, 209B; 309A, 309B) wesentlich geringeren Querschnitts parallel zu dem ersten Leiter (107; 207; 307) und symmetrisch zu einer Symmetrieebene seines Querschnitts angeordnet sind, daß die weiteren Leiter (109A, 109B; 209A, 209B; 309A, 309B) ihrerseits jeweils von einer Isolierung (110A, 110B; 213; 310A, 310B) umgeben und fest mit dem ersten Leiter (107; 207; 307) verbunden sind, und daß die Winkellage der zwei weiteren Leiter (109A, 109B; 209A, 209B; 309A, 309B) in Bezug auf den ersten Leiter (107; 207; 307) durch die Form des Kabels und/oder eine Markierung (319) von außen erkennbar ist.

15. Kabel nach Anspruch 14, **dadurch gekennzeichnet, daß** die zwei weiteren Leiter (109A, 109B; 209A, 209B; 309A, 309B) mitsamt ihrer jeweiligen Isolierung (110A, 110B; 213; 310A, 310B) von dem ersten Leiter (107; 207; 307) ohne Zerstörung der Isolierung (108; 213; 308) desselben abtrennbar sind.

16. Kabel nach Anspruch 14 oder 15, **dadurch gekennzeichnet, daß** die Isolierungen (110A, 110B; 213) der zwei weiteren Leiter (109A, 109B; 209A, 209B) einstückig mit der Isolierung (108; 213) des ersten Leiters (107; 207) ausgebildet und mit dieser über Sollbruchstellen (111A, 111B; 211A, 211B) verbunden sind.

17. Kabel nach Anspruch 14 oder 15, **dadurch gekennzeichnet, daß** die zwei weiteren Leiter (309A, 309B) Bestandteile eines von dem ersten Leiter (307) und dessen Isolierung (308) separaten, isolierten Flachkabels sind, das an der Isolierung (308) des ersten Leiters (307) anliegt und an dieser durch eine gemeinsame Ummantelung (318) festgehalten wird.

18. Kabel nach Anspruch 17, **dadurch gekennzeichnet, daß** die gemeinsame Ummantelung (318) aus einem nachträglich angebrachten, textilen oder textilverstärkten Erzeugnis besteht.

## Claims

1. Device for inductive transmission of electrical power, with a primary-side power line which consists of two core wires run parallel to one another and from which power can be extracted through at least one secondary-side moving pickup by means of inductive coupling along its length, **characterised in that** a data line (4) consisting of two core wires (4A, 4B) run parallel to one another is provided on the primary side for additional inductive transmission of data to or from the pickup (3A to 3C), **in that** the two core wires (4A, 4B) of the data line are arranged adjacent to one of the two core wires (2B) of the power line (2) and further away from the other of the two core wires (2A) of the power line (2), and **in that** they are arranged symmetrically in relation to a plane, in relation to which the cross-section of the conductor (7) of the adjacent core wire (2B) of the power line (2) is symmetrical for its part.

2. Device according to claim 1, **characterised in that** the data line (4) exhibits the same kind of symmetry in relation to the core wire (2A) of the power line (2) which is further away as in relation to the adjacent core wire (2B).

3. Device according to claim 2, **characterised in that** the data line is arranged on the side of the adjacent core wire (2B) of the power line (2) which is remote from the other core wire (2A).

4. Device according to claim 1, **characterised in that** the data line (4) is arranged in the interspace between the adjacent core wire (2B) of the power line (2) and the space in which the secondary-side pickup (3A to 3C) moves.

5. Device according to one of claims 1 to 4, **characterised in that** the data line (4) is fastened to the power line (2).

6. Device according to claim 5, **characterised in that** the fastening of the data line (4) to the power line (2) is effected by a plurality of connecting elements which are arranged along the two lines (2 and 4) and locked to these.

7. Device according to one of claims 1 to 5, **characterised in that** the data line (4) is incorporated together with the power line (2) in a common cable.

8. Device according to one of claims 1 to 7, **characterised in that** an inductance which is coupled magnetically to the data line (4), is provided in or on the secondary-side pickup (3A to 3C).

9. Device according to claim 8, **characterised in that** the inductance on the pickup side coupled magnetically to the data line (4) is arranged in or on the pickup (3A to 3C) so that in the operating position of the pickup (3A to 3C) it maintains the same kind of symmetry as the data line (4) to the core wire (2B) of the power line (2) to which the data line (4) is adjacent.

10. Device according to claim 8 or 9, **characterised in that** at least one transmitting device (5) and at least one receiving device (6A to 6C), between which information signals can be transmitted through the data line (4) and the inductance coupled magnetically to the latter, are provided on one side at one point at least along the primary-side data line (4) or at one end thereof, and on the other side in or on the secondary-side pickup (3A to 3C).

11. Device according to claim 10, **characterised in that** in each case combined transmitting and receiving devices (5; 6A to 6C) are provided both on the primary side and on the secondary side, through which bidirectional communication is enabled through the data line (4).

12. Device according to one of claims 1 to 11, **characterised in that** a data line (4) is arranged adjacent to each of the two core wires (2A, 2B) of the power line (2).

13. Device according to claim 12, **characterised in that** transmitting and receiving devices (5; 6A to 6C), which together produce communication in full duplex mode, are associated with each data line (4) on the primary side and the secondary side.

14. Cable for the primary conductor loop of a device for inductive transmission of electrical power to at least one moving consumer, with a conductor of roughly symmetrical cross-section which is surrounded by an insulator, **characterised in that** two further conductors (109A, 109B; 209A, 209B; 309A, 309B) of essentially smaller cross-section are arranged parallel to the first conductor (107; 207; 307) and symmetrically to a plane of symmetry of its cross-section for simultaneous inductive transmission of data to and/or from the consumer, **in that** the further conductors (109A, 109B; 209A, 209B; 309A, 309B) for their part are each surrounded by an insulator (110A, 110B; 213; 310A, 310B) and connected securely to the first conductor (107; 207; 307), and **in that** the angular position of the two further conductors (109A, 109B; 209A, 209B; 309A, 309B) in relation to the first conductor (107; 207; 307) is recognisable externally by the shape of the cable and/or a mark (319).

15. Cable according to claim 14, **characterised in that** the two further conductors (109A, 109B; 209A, 209B; 309A, 309B) together with their respective insulator (110A, 110B; 213; 310A, 310B) are separable from the first conductor (107; 207; 307) without destroying the insulator (108; 213; 308) thereof.

16. Cable according to claim 14 or 15, **characterised in that** the insulators (110A, 110B; 213) of the two further conductors (109A, 109B; 209A, 209B) are formed in one piece with the insulator (108; 213) of the first conductor (107; 207) and are connected to this through design breakage points (111A, 111B; 211A, 211B).

17. Cable according to claim 14 or 15, **characterised in that** the two further conductors (309A, 309B) are components of an insulated flat cable which is separate from the first conductor (307) and its insulator (308) and lies on the insulator (308) of the first conductor (307) and is attached securely to the latter by a common sheathing (318).

18. Cable according to claim 17, **characterised in that** the common sheathing (318) consists of a subsequently fitted textile or textile-reinforced product.

## Revendications

1. Dispositif de transfert inductif d'énergie électrique, pourvu d'une ligne d'énergie primaire composée de deux fils disposés parallèlement l'un par rapport à l'autre, de laquelle on peut prélever de l'énergie par au moins un circuit sortant secondaire mobile au moyen d'un accouplement inductif le long de son parcours, **caractérisé en ce qu'**une ligne de données (4) composée de deux fils (4A, 4B) disposés parallèlement l'un par rapport à l'autre est prévue du côté primaire pour un transfert supplémentaire de données du ou vers le circuit sortant (3A à 3C), **en ce que** les deux fils (4A, 4B) de la ligne de données sont disposés à proximité d'un des deux fils (2B) de la ligne d'énergie (2) et de nouveau éloignés de l'autre des deux fils (2A) de la ligne d'énergie (2), et **en ce qu'**ils sont disposés symétriquement à un niveau, par rapport auquel la section transversale du conducteur (7) du fil rapproché (2B) de la ligne d'énergie (2) est symétrique de son côté.

2. Dispositif selon la revendication 1, **caractérisé en ce que** la ligne de données (4) par rapport au fil à nouveau éloigné (2A) de la ligne d'énergie (2) comporte le même type de symétrie que par rapport au fil rapproché (2B).

3. Dispositif selon la revendication 2, **caractérisé en ce que** la ligne de données est disposée sur le côté respectif du fil rapproché (2B) de la ligne d'énergie (2), qui est opposé à l'autre fil (2A).

4. Dispositif selon la revendication 1, **caractérisé en ce que** la ligne de données (4) est disposée dans l'intervalle entre le fil s'en rapprochant (2B) de la ligne d'énergie (2) et l'espace, dans lequel le circuit sortant secondaire (3A à 3C) se déplace.

5. Dispositif selon l'une des revendications 1 à 4, **caractérisé en ce que** la ligne de données (4) est fixée sur la ligne d'énergie (2).

6. Dispositif selon la revendication 5, **caractérisé en ce que** la fixation de la ligne de données (4) sur la ligne d'énergie (2) s'effectue par une pluralité d'éléments de liaison, qui sont disposés et verrouillés le long des deux lignes (2 et 4).

7. Dispositif selon l'une des revendications 1 à 5, **caractérisé en ce que** la ligne de données (4) est intégrée avec la ligne d'énergie (2) dans un câble commun.

8. Dispositif selon l'une des revendications 1 à 7, **caractérisé en ce qu'**une inductance, qui est couplée magnétiquement avec la ligne de données (4), est prévue dans ou sur le circuit sortant secondaire (3A à 3C).

9. Dispositif selon la revendication 8, **caractérisé en ce que** l'inductance du côté du circuit sortant couplée magnétiquement à la ligne de données (4) est disposée dans ou sur le circuit sortant (3A à 3C) de manière à ce qu'elle maintienne le même type de symétrie que celle de la ligne de données (4) sur le fil correspondant (2B) de la ligne d'énergie (2), duquel la ligne de données (4) est rapprochée, en position de fonctionnement du circuit sortant (3A à 3C).

10. Dispositif selon la revendication 8 ou 9, **caractérisé en ce que**, d'une part à au moins un endroit le long de la ligne de données (4) primaire ou à une extrémité de celle-ci, et d'autre part dans ou sur le circuit sortant (3A à 3C) secondaire, au moins une installation d'émission (5) et au moins une installation de réception (6A à 6C) sont prévues, entre lesquelles des signaux d'informations peuvent être transmis par la ligne de données (4) et l'inductance couplée magnétiquement avec cette dernière.

11. Dispositif selon la revendication 10, **caractérisé en ce que** des installations d'émission et de réception combinées (5 ; 6A à 6C) sont prévues aussi bien du côté primaire que secondaire, une communication bidirectionnelle par la ligne de données (4) étant ainsi possible.

12. Dispositif selon l'une quelconque des revendications 1 à 11, **caractérisé en ce qu'**une ligne de données (4) est disposée respectivement à proximité de chacun des deux fils (2A, 2B) de la ligne d'énergie (2).

13. Dispositif selon la revendication 12, **caractérisé en ce que** chaque ligne de données (4) est associée du côté primaire et secondaire à des installations d'émission et de réception correspondantes (5 ; 6A à 6C), qui réalisent une communication en fonctionnement en duplex intégral.

14. Câble pour la boucle du conducteur primaire d'un dispositif de transfert inductif d'énergie électrique vers au moins un consommateur mobile, pourvu d'un conducteur avec une section transversale approximativement symétrique, qui est entourée par une isolation, **caractérisé en ce que** deux autres conducteurs (109A, 109B ; 209A, 209B ; 309A, 309B) de section transversale sensiblement inférieure sont disposés parallèlement au premier conducteur (107 ; 207 ; 307) et symétriquement à un niveau de symétrie de sa section transversale pour un transfert simultané de données vers et/ou du consommateur, **en ce que** les autres conducteurs (109A, 109B ; 209A, 209B ; 309A, 309B) de leur côté sont chacun entourés d'une isolation (110A, 110B ; 213 ; 310A, 310B) et reliés solidement au premier conducteur (107 ; 207 ; 307), et **en ce que** la position angulaire de deux autres conducteurs (109A, 109B ; 209A, 209B ; 309A, 309B) par rapport au premier conducteur (107 ; 207 ; 307) est reconnaissable de l'extérieur par la forme du câble et/ou un marquage (319).

15. Câble selon la revendication 14, **caractérisé en ce que** les deux autres conducteurs (109A, 109B ; 209A, 209B ; 309A, 309B) avec leur isolation respective (110A, 110B ; 213 ; 310A, 310B) peuvent être séparés du premier conducteur (107 ; 207 ; 307) sans destruction de l'isolation (108 ; 213 ; 308) de ce dernier.

16. Câble selon la revendication 14 ou 15, **caractérisé en ce que** les isolations (110A, 110B ; 213) des deux autres conducteurs (109A, 109B ; 209A, 209B) sont conçues en une seule pièce avec l'isolation (108 ; 213) du premier conducteur (107 ; 207) et sont reliées à celle-ci par des sections de rupture intentionnellement prévues (111A, 111B ; 211A, 211B).

17. Câble selon la revendication 14 ou 15, **caractérisé en ce que** les deux autres conducteurs (309A, 309B) sont des composants d'un câble plat isolé distinct du premier conducteur (307) et de son isolation (308), qui est en contact avec l'isolation (308) du premier conducteur (307) et qui est fixé à celle-ci par une gaine commune (318).

18. Câble selon la revendication 17, **caractérisé en ce que** la gaine commune (318) est composée d'un produit renforcé par du textile ou textile apposé par la suite.
